# EUROPÄISCHE PATENTSCHRIFT

(11) **EP 3 464 848 B1**
(45) Veröffentlichungstag und Bekanntmachung des Hinweises auf die Patenterteilung: **04.03.2020**
(21) Anmeldenummer: 17721140.6
(22) Anmeldetag: 03.05.2017
(51) Int. Cl.: F01N 3/20

(54) **KÜHLKÖRPER FÜR EIN EINSPRITZ-/DOSIERVENTIL**
HEAT SINK FOR AN INJECTION/METERING VALVE
CORPS DE REFROIDISSEMENT POUR UNE SOUPAPE D'INJECTION/DE DOSAGE

(30) Priorität: 30.05.2016 DE 102016209269
(43) Veröffentlichungstag der Anmeldung: 10.04.2019
(73) Patentinhaber: Robert Bosch GmbH, 70442 Stuttgart (DE)
(72) Erfinder: HANNEKE, Juergen, 70499 Stuttgart (DE)
(86) Internationale Anmeldenummer: PCT/EP2017/060466
(87) Internationale Veröffentlichungsnummer: WO 2017/207196

(56) Entgegenhaltungen:
- WO-A1-2013/068288
- DE-A1-102010 051 656
- DE-A1-102013 205 309
- US-A1- 2014 054 394

## Beschreibung

Die Erfindung betrifft einen Kühlkörper für ein Einspritz- bzw. Dosierventil.

### Stand der Technik

In Systemen zur Abgasnachbehandlung werden Einspritz- bzw. Dosierventile verwendet, um ein fluides Reduktionsmittel, z.B. eine wässrige Harnstofflösung ("AdBlue"®), in den Abgasstrang eines Verbrennungsmotors, insbesondere eines Dieselmotors, einzuspritzen. Die Einspritz- bzw. Dosierventile sind dabei direkt am Abgasstrang angeordnet und daher im Betrieb hohen Temperaturen ausgesetzt.

Um eine Beschädigung der Einspritz- / Dosierventile zu vermeiden und einen sicheren Betrieb zu gewährleisten, werden die Einspritz- / Dosierventile häufig mit Kühlkörpern versehen, die von einem fluiden Kühlmittel durchströmt werden, um das Einspritz- / Dosierventil zu kühlen.

Fertigungstoleranzen der Kühlkörper führen zu verschiedenen Durchflussquerschnitten, was ein unterschiedliches Kühlverhalten der Kühlkörper zur Folge hat.

DE 10 2013 205 309 A1 offenbart eine Vorrichtung zum dosierten Einspritzen eines Fluids, insbesondere eines Reduktionsmittels, in den Abgastrakt eines Verbrennungsmotors. Die Vorrichtung enthält ein Einspritzventil und einen um das Einspritzventil angeordneten Kühlmittelraum. Um das Einspritzventil zu kühlen weist die Vorrichtung einen Zu- und Ablauf für Kühlmittel auf.

Auch US 2014/0054394 A1 offenbart ein in einer Vorrichtung angeordnetes Einspritzventil. Dieses wird durch Kühlmittel gekühlt, das durch Zu- und Ablaufleitungen in die Vorrichtung eingebracht wird.

Es ist eine Aufgabe der Erfindung, Kühlkörper für Einspritz- / Dosierventile zur Verfügung zu stellen, die ein möglichst konstantes Kühlverhalten aufweisen.

### Offenbarung der Erfindung

Gemäß einem Ausführungsbeispiel der Erfindung umfasst ein Kühlkörper für ein Einspritz-/Dosierventil einen Kühlmittelraum, der zur Aufnahme eines fluiden Kühlmittels ausgebildet ist. Der Kühlmittelraum hat wenigsten einen Zulauf zum Zuführen des Kühlmittels in den Kühlmittelraum und wenigstens einen Ablauf zum Abführen des Kühlmittels aus dem Kühlmittelraum. Der Zulauf und/oder Ablauf umfasst dabei ein Rohrstück, das sich mit einem Ende in den Kühlmittelraum erstreckt.

Das kühlmittelraumseitige Ende des Rohrstücks ist abgeschrägt, so dass das kühlmittelraumseitige Ende des Rohrstücks an wenigstens einer Stelle entlang seines stirnseitigen Umfangs im Kontakt mit einem in dem Kühlmittelraum angeordneten Leitblech steht, und das Ende des Rohrstücks an einen anderen Stelle entlang seines stirnseitigen Umfangs in einem Abstand von dem Leitblech angeordnet ist.

Durch den Kontaktpunkt, an dem das Ende des Rohrstücks das Leitblech berührt, und durch den Winkel des abgeschrägten Endes des Rohrstücks wird eine definierte Geometrie mit geringen Toleranzen geschaffen. Kühlkörper, die gemäß Ausführungsbeispielen der Erfindung ausgebildet sind, weisen daher ein sehr konstantes Kühlverhalten auf.

Die Erfindung umfasst auch ein Einspritz-/Dosierventil mit einem erfindungsgemäßen Kühlkörper sowie einen Abgasstrang eines Verbrennungsmotors, an dem ein solches Einspritz-/Dosierventil angebracht ist, um ein Reduktionsmittel in den Abgasstrang einzuspritzen.

In einer Ausführungsform erstreckt sich das Leitblech im Wesentlichen in einem rechten Winkel zu dem Rohrstück. Auf diese Weise kann eine exakte Geometrie geschaffen werden und durch die Wahl des Winkels, in dem das Ende des Rohrstücks abgeschrägt ist, kann ein Drosseleffekt des Zulaufs und/oder des Ablaufs mit hoher Genauigkeit auf einen gewünschten Wert eingestellt werden.

In einer Ausführungsform hat der Kühlkörper eine Aufnahme für ein Einspritz-/ Dosierventil, die derart ausgebildet ist, dass sich das Leitblech im Wesentlichen parallel zu einem in der Aufnahme angeordneten Einspritz-/Dosierventil erstreckt. Auf diese Weise kann eine besonders gleichmäßige Kühlung des Einspritz-/ Dosierventils erreicht werden.

In einer Ausführungsform ist der Kühlmittelraum im Wesentlichen rotationssymmetrisch um die Achse eines in der Aufnahme angeordneten Einspritz-/ Dosierventils ausgebildet ist. Ein rotationssymmetrisch ausgebildeter Kühlkörper kann besonders einfach und kostengünstig hergestellt werden.

In einer Ausführungsform ist eine Achse des Rohrstücks im Wesentlichen rechtwinklig zu einem in der Aufnahme angeordneten Einspritz-/Dosierventil ausgerichtet. Auf diese Weise kann eine exakte Geometrie geschaffen werden und durch die Wahl des Winkels, in dem das Ende des Rohrstücks abgeschrägt ist, kann der Drosseleffekt des Zulaufs und/oder des Ablaufs exakt auf einen gewünschten Wert eingestellt werden.

In einer Ausführungsform ist die Stirnseite des Rohrstück in einem Winkel α, 7° < α < 26°, abgeschrägt. Ein solcher Winkel hat sich als besonders geeignet erwiesen, um den gewünschten Drosseleffekt zu realisieren.

In einer Ausführungsform ist der Winkel α_{zu} des Rohrstücks des Zulaufs kleiner als der Winkel α_{ab} des Rohrstücks des Ablaufs. Auf diese Weise kann ein ausreichender Kühlmittelfluss und damit eine ausreichende Kühlung des Einspritz-/Dosierventils erreicht werden.

Beispielsweise kann die Stirnseite des Rohrstück des Zulaufs in einem Winkel α_{zu}, 7° < α_{zu} < 25°, abgeschrägt sein, während die Stirnseite des Rohrstück des Ablaufs in einem Winkel α_{ab}, 8° < α_{ab} < 26° abgeschrägt ist.

In einer Ausführungsform ist der Ablauf dem Zulauf gegenüberliegend angeordnet. Insbesondere ist der Ablauf dem Zulauf in einem Winkel von 180° entlang des äußeren Umfangs des Kühlkörpers gegenüberliegend angeordnet. Auf diese Weise kann eine vollständige Durchströmung des Kühlmittelraumes mit Kühlmittel erreicht werden.

### Kurze Beschreibung der Figuren

Figur 1 zeigt eine schematische Schnittansicht eines Kühlkörpers gemäß einem Ausführungsbeispiel der Erfindung.
Figur 2 zeigt eine vergrößerte Schnittdarstellung eines Zulaufs in einen in dem Kühlkörper ausgebildeten Kühlmittelraum.

### Figurenbeschreibung

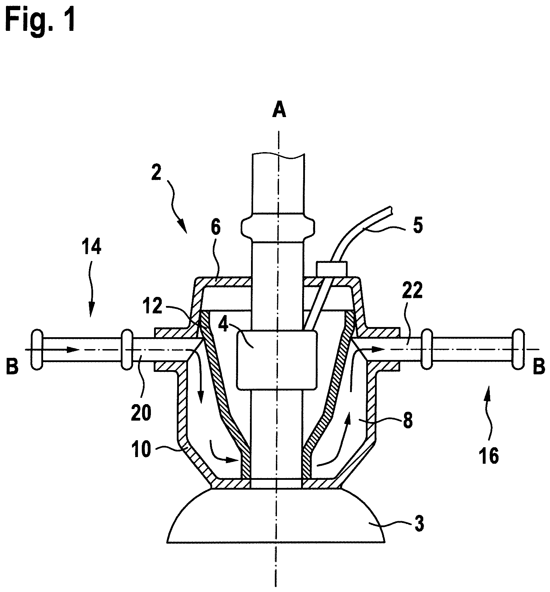

Figur 1 zeigt eine schematische Schnittansicht eines Kühlkörpers 2 mit einem Einspritz-/Dosierventil 4 gemäß einem Ausführungsbeispiel der Erfindung.

Der Kühlkörper 2 ist an einem Abgasstrang 3 einer Abgasanlage eines (nicht gezeigten) Verbrennungsmotors angeordnet.

Der Kühlkörper 2 weist ein im Wesentlichen rotationssymmetrisch um die Achse A des Einspritz-/Dosierventils 4 ausgebildetes Gehäuse 6 auf, in dem ein Kühlmittelraum 8 ausgebildet ist. Der Kühlmittelraum 8 wird auf der Außenseite durch die Wand 10 des Gehäuses 6 begrenzt. In dem Kühlmittelraum 8 ist wenigstens ein Leitblech 12 angeordnet, das in einem abgasstrangnahen Bereich, der im unteren Bereich der Figur 1 dargestellt ist, an den äußeren Umfang des Einspritz-/ Dosierventils 4 angrenzt.

Durch eine fluiddicht abgedichtete Öffnung im Gehäuse 6 ist eine elektrische Leitung 5 zum Ansteuern des Einspritz-/Dosierventils 4 in das Innere des Gehäuses 6 geführt.

In den Kühlmittelraum 8 münden wenigstens ein Zulauf 14 zum Zuführen des Kühlmittels in den Kühlmittelraum 8 und wenigstens einen Ablauf 16 zum Abführen des Kühlmittels aus den Kühlmittelraum 8. Der Ablauf 16 ist beispielsweise dem Zulauf 14 gegenüberliegend, d.h. entlang des Umfangs des Gehäuses 6 um 180° versetzt, angeordnet. Dies bewirkt, dass der Kühlmittelraum 8 vollständig vom Kühlmittel durchströmt wird.

Der Zulauf 14 und der Ablauf 16 weisen jeweils eine zylindrisches Rohrstück 20, 22 auf, dessen Achse B jeweils im Wesentlichen rechtwinklig zur Achse A des Einspritz-/Dosierventils 4 ausgerichtet ist. Ein dem Einspritz-/Dosierventil 4 zugewandtes Ende jedes Rohrstücks 20, 22 erstreckt sich derart in den Kühlmittelraum 8, das dass dem Einspritz-/Dosierventil 4 zugewandten Ende wenigstens teilweise im Kontakt mit dem Leitblech 12 steht. Das Leitblech 12 ist in diesem Bereich nahezu parallel zur Achse A des Einspritz-/Dosierventils 4, d.h. im Wesentliche rechtwinklig zur Achse B des Rohrstücks 20, 22 ausgerichtet.

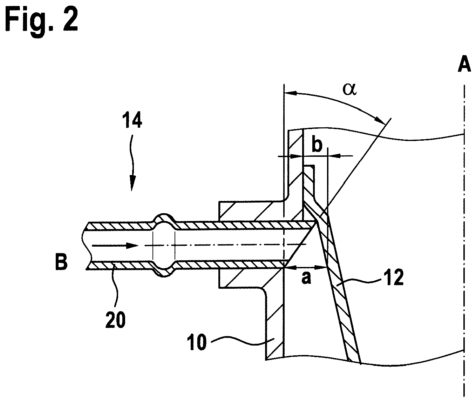

Figur 2 zeigt in einer vergrößerten Schnittdarstellung den Endbereich des Rohrstücks 20 des Zulaufs 14, das an das Leitblech 12 grenzt.

Die dem Leitblech 12 zugewandte Stirnseite des Rohrstücks 20 ist abgeschrägt, so dass das Rohrstück 20 in seinem oberen Bereich an das Leitblech 12, das bei der Montage als Anschlag für das Rohrstück 20 dient, angrenzt, und in seinem unteren Bereich von dem Leitblech 12 beabstandet ist. Die dem Leitblech 12 zugewandte Stirnseite des Rohrstücks 20 des Zulaufs 14 kann insbesondere in einem Winkel 7° < α < 25° abgeschrägt sein, so dass das untere Ende des Rohstücks 20 in einem Abstand a von 2 bis 7 mm von dem Leitblech 12 angeordnet ist.

Durch die Wahl des Winkels α, in dem die Stirnseite des Rohstücks 20 abgeschrägt ist, bzw. des Abstandes a zwischen dem unteren Bereich der Stirnseite des Rohstücks 20 und dem Leitblech 12 kann eine Drosselwirkung eingestellt werden: Je kleiner der Winkel α und damit der Abstand a, desto größer ist die Drosselwirkung. Alternativ oder zusätzlich kann die Drosselwirkung durch die Form und Anordnung des Leitblechs 12, beispielsweise durch Variieren des Abstandes b zwischen dem Leitblech 12 und der Wand 10 des Gehäuses 6 reguliert werden.

Das Rohrstück 22 des Ablaufs 16 kann entsprechend ausgebildet sein.

Um einen ausreichenden Kühlmittelfluss durch den Kühlmittelraum 8 zu gewährleisten, ist der Winkel α_{zu} des Rohrstücks 20 des Zulaufs 14 in der Regel um 2° kleiner als der Winkel α_{ab} des Rohrstücks 22 des Ablaufs 16.

Insbesondere kann die Stirnseite des Rohrstück 22 des Ablaufs 16 in einem Winkel α_{ab}, 8° < α_{ab} < 26° abgeschrägt sein.

## Patentansprüche

1. Kühlkörper (2) für ein Einspritz-/Dosierventil (4) mit
einem Kühlmittelraum (8), der zur Aufnahme eines fluiden Kühlmittels ausgebildet ist,
wobei der Kühlmittelraum (8) wenigsten einen Zulauf (14) zum Zuführen des Kühlmittels und wenigstens einen Ablauf (16) zum Abführen des Kühlmittels aufweist;
wobei der wenigstens eine Zulauf (14) und/oder Ablauf (16) ein Rohrstück (20, 22) aufweist, dass sich mit einem Ende in den Kühlmittelraum (8) erstreckt;
**dadurch gekennzeichnet, dass** das kühlmittelraumseitige Ende des Rohrstücks (20, 22) abgeschrägt ist, so dass das kühlmittelraumseitige Ende des Rohrstücks (20, 22) an wenigstens einer Stelle entlang seines Umfangs im Kontakt mit einem in dem Kühlmittelraum (8) angeordneten Leitblech (12) steht, und das Ende des Rohrstücks (20, 22) an einer anderen Stelle entlang seines Umfangs von dem Leitblech (12) beabstandet ist.

2. Kühlkörper (2) nach Anspruch 1, wobei sich das Leitblech (12) im Wesentlichen in einem rechten Winkel zu dem Rohrstück (20, 22) erstreckt.

3. Kühlkörper (2) nach Anspruch 1 oder 2, wobei der Kühlkörper (2) derart ausgebildet ist, dass sich das Leitblech (12) im Wesentlichen parallel zu einem in dem Kühlkörper (2) angeordneten Einspritz-/Dosierventil (4) erstreckt.

4. Kühlkörper (2) nach Anspruch 2 oder 3, wobei der Kühlmittelraum (8) im Wesentlichen rotationssymmetrisch um die Achse (A) eines in dem Kühlkörper (2) angeordneten Einspritz-/Dosierventils (4) ausgebildet ist.

5. Kühlkörper (2) nach einem der Ansprüche 2 bis 3, wobei das Rohrstück (20, 22) im Wesentlichen rotationssymmetrisch um eine Achse (B) ausgebildet ist, die im Wesentlichen in einem rechten Winkel zur Achse (A) eines in dem Kühlkörper (2) angeordneten Einspritz-/Dosierventil (4) ausgerichtet ist.

6. Kühlkörper (2) nach einem der vorangehenden Ansprüche, wobei die Stirnseite des Rohrstück (20, 22) in einem Winkel α, 7° < α < 26° abgeschrägt ist.

7. Kühlkörper (2) nach einem der vorangehenden Ansprüche, wobei der Winkel α_{zu} des Rohrstücks (20, 22) des Zulaufs (14) kleiner als der Winkel α_{ab} des Rohrstücks (20, 22) des Ablaufs (16) ist.

8. Kühlkörper (2) nach einem der vorangehenden Ansprüche, wobei der Ablauf (16) dem Zulauf (14) gegenüberliegend angeordnet ist.

9. Einspritz-/Dosierventil (4) mit einem Kühlkörper (2) nach einem der Ansprüche 1 bis 8.

10. Abgasstrang (3) mit einem Einspritz-/Dosierventil (4) nach Anspruch 9, wobei das Einspritz-/Dosierventil (4) ausgebildet ist, ein Reduktionsmittel in den Abgasstrang (3) einzuspritzen.

## Claims

1. Heat sink (2) for an injection/metering valve (4) having
a coolant chamber (8), which is designed to receive a fluid coolant,
wherein the coolant chamber (8) has at least one inlet (14) for feeding in the coolant and at least one outlet (16) for discharging the coolant;
wherein the at least one inlet (14) and/or outlet (16) has a pipe segment (20, 22), one end of which extends into the coolant chamber (8);
**characterized in that** the coolant-chamber end of the pipe segment (20, 22) is beveled, and therefore the coolant-chamber end of the pipe segment (20, 22) is in contact at at least one point along its circumference with a baffle (12) arranged in the coolant chamber (8), and the end of the pipe segment (20, 22) is spaced apart at another point along its circumference from the baffle (12).

2. Heat sink (2) according to Claim 1, wherein the baffle (12) extends substantially at a right angle to the pipe segment (20, 22).

3. Heat sink (2) according to Claim 1 or 2, wherein the heat sink (2) is designed in such a way that the baffle (12) extends substantially parallel to an injection/metering valve (4) arranged in the heat sink (2).

4. Heat sink (2) according to Claim 2 or 3, wherein the coolant chamber (8) is of substantially rotationally symmetrical design around the axis (A) of an injection/metering valve (4) arranged in the heat sink (2).

5. Heat sink (2) according to either of Claims 2 and 3, wherein the pipe segment (20, 22) is of substantially rotationally symmetrical design around an axis (B), which is aligned substantially at a right angle to the axis (A) of an injection/metering valve (4) arranged in the heat sink (2).

6. Heat sink (2) according to one of the preceding claims, wherein the end face of the pipe segment (20, 22) is beveled at an angle α, 7° < α < 26°.

7. Heat sink (2) according to one of the preceding claims, wherein the angle α_{zu} of the pipe segment (20, 22) of the inlet (14) is smaller than the angle α_{ab} of the pipe segment (20, 22) of the outlet (16).

8. Heat sink (2) according to one of the preceding claims, wherein the outlet (16) is arranged opposite the inlet (14).

9. Injection/metering valve (4) having a heat sink (2) according to one of Claims 1 to 8.

10. Exhaust line (3) having an injection/metering valve (4) according to Claim 9, wherein the injection/metering valve (4) is designed to inject a reducing agent into the exhaust line (3).

## Revendications

1. Corps de refroidissement (2) pour une soupape d'injection/de dosage (4) avec une chambre de moyen de refroidissement (8) réalisée pour recevoir un moyen de refroidissement fluide ;
la chambre de moyen de refroidissement (8) comportant au moins une amenée (14) pour amener le moyen de refroidissement et au moins une évacuation (16) pour évacuer le moyen de refroidissement ;
l'au moins une amenée (14) et/ou évacuation (16) comportant une pièce tubulaire (20, 22) s'étendant avec une extrémité dans la chambre de moyen de refroidissement (8) ;
**caractérisé en ce que** le côté d'extrémité de chambre de moyen de refroidissement de la pièce tubulaire (20, 22) est biseauté, de sorte que le côté d'extrémité de chambre de moyen de refroidissement de la pièce tubulaire (20, 22) soit au contact, au niveau d'au moins un point situé le long de sa périphérie, avec une tôle conductrice (12) disposée dans la chambre de moyen de refroidissement (8) et que l'extrémité de la pièce tubulaire (20, 22) soit placée, au niveau de son autre point le long de sa périphérie, à une certaine distance de la tôle conductrice (12).

2. Corps de refroidissement (2) selon la revendication 1, la tôle conductrice (12) s'étendant pour l'essentiel selon un angle droit par rapport à la pièce tubulaire (20, 22).

3. Corps de refroidissement (2) selon la revendication 1 ou 2, le corps de refroidissement (2) étant réalisé de telle sorte que la tôle conductrice (12) s'étende pour l'essentiel parallèlement à une soupape d'injection/de dosage (4) disposée dans le corps de refroidissement (2).

4. Corps de refroidissement (2) selon la revendication 2 ou 3, la chambre de moyen de refroidissement (8) étant réalisée pour l'essentiel symétriquement en rotation autour de l'axe (A) d'une soupape d'injection/de dosage (4) disposée dans le corps de refroidissement (2).

5. Corps de refroidissement (2) selon l'une quelconque des revendications 2 à 3, la pièce tubulaire (20, 22) étant réalisée pour l'essentiel symétriquement en rotation autour d'un axe (B) orienté pour l'essentiel selon un angle droit par rapport à l'axe (A) d'une soupape d'injection/de dosage (4) disposée dans le corps de refroidissement (2).

6. Corps de refroidissement (2) selon l'une quelconque des revendications précédentes, le côté avant de la pièce tubulaire (20, 22) étant biseauté selon un angle α, 7° < α < 26°.

7. Corps de refroidissement (2) selon l'une quelconque des revendications précédentes, l'angle α_{zu} de la pièce tubulaire (20, 22) de l'amenée (14) étant plus petit que l'angle α_{ab} de la pièce tubulaire (20, 22) de l'évacuation (16).

8. Corps de refroidissement (2) selon l'une quelconque des revendications précédentes, l'évacuation (16) étant disposée à l'opposé de l'amenée (14).

9. Soupape d'injection/de dosage (4) équipée d'un corps de refroidissement (2) selon l'une quelconque des revendications 1 à 8.

10. Chaîne de gaz d'échappement (3) équipée d'une soupape d'injection/de dosage (4) selon la revendication 9, la soupape d'injection/de dosage (4) étant réalisée pour injecter un agent de réduction dans la chaîne de gaz d'échappement (3).
